# EUROPEAN PATENT APPLICATION

(11) **EP 1 931 066 A2**
(43) Date of publication of application: **11.06.2008**
(21) Application number: 07122034.7
(22) Date of filing: 30.11.2007
(51) Int. Cl.: H04H 20/91

(54) **Broadcast receiving apparatus and control method for receiving software**

(30) Priority: 05.12.2006 KR 20060121922
(71) Applicant: Samsung Electronics Co., Ltd., Suwon-si, Gyeonggi-do 442-742 (KR)
(72) Inventor: Kim, Young-kee, Gyeonggi-do (KR)
(74) Representative: Walaski, Jan Filip

(57) **Abstract**

A broadcast receiving apparatus and control method thereof are provided, the apparatus including: a broadcast tuner which receives a broadcast signal and tunes at least one channel; and a controller which controls the broadcast tuner to tune a channel and determines whether the tuned channel has software data, and stores the software data in a memory if the tuned channel includes the software data, if a non-broadcast mode is selected not to display the broadcast signal on the display part.

## Description

The present invention relates to a broadcasting receiving apparatus and a control method thereof, and more particularly, to a broadcasting receiving apparatus which receives software data, and a control method thereof.

As digital broadcasting technologies have been developed and widely distributed, a user can enjoy various services compared with an existing analog broadcasting. Digital broadcasting offers data services as well as video/audio signals, and may provide software upgrade services as a part of a data service. That is, the digital broadcasting may transmit software upgrade data, i.e., over the air (OTA) data together with a broadcasting signal. Then, a broadcasting receiving apparatus receives and executes the software upgrade data corresponding to its product specifications.

Thus, a user does not need to take the broadcasting receiving apparatus to a service center to upgrade the software, and instead, is able to download the software upgrade data through the digital broadcasting to upgrade the software, thereby being provided with a useful and convenient software upgrading service.
However, such OTA data is included in a specific channel. If a user does not tune to the specific channel, he/she may not be able to download the software upgrade data. Thus, a user may not be able to download the OTA data provided during a certain period.

Even if a user tunes the specific channel, it takes time to download the OTA data according to the amount of the data. Thus, if a user changes the channel before downloading the OTA data completely, the software cannot be upgraded.

Accordingly, an aspect of the present invention provides a broadcasting receiving apparatus which efficiently receives OTA data, and a control method thereof. Additional aspects of the present invention will be set forth in part in the description which follows and, in part, will be obvious from the description, or may be learned by practice of the present invention.

The foregoing and/or other aspects of the present invention can be achieved by providing a broadcasting receiving apparatus comprising: a broadcasting tuner which receives a broadcasting signal and tunes at least one channel; and a controller which controls the broadcasting tuner to tune a channel and determines whether the tuned channel has software data, and stores the software data in a memory if the tuned channel includes the software data, if a non-broadcasting mode is selected not to display the broadcasting signal.

According to an aspect of the invention, the broadcasting receiving apparatus further comprises an external interface which is connected with an external device, wherein the non-broadcasting mode comprises an external input mode in which the external interface is selected as an image source.

According to an aspect of the invention, the broadcasting receiving apparatus further comprises a power switch to turn on and off power supplied to the display part, wherein the non-broadcasting mode comprises a power-off mode in which power supplied to the display part is cut off.

According to an aspect of the invention, the controller stores information on a data channel having the software data in the memory.

According to an aspect of the invention, the broadcasting receiving apparatus further comprises a user input part to select the non-broadcasting mode, wherein the controller controls the broadcasting tuner to tune the data channel if the non-broadcasting mode is selected.

According to an aspect of the invention, the controller executes the software data stored in the memory.

According to an aspect of the invention, the software data comprises firmware.

According to an aspect of the invention, the controller controls the broadcasting tuner to tune the channel sequentially if the software data is absent from the tuned channel.

According to an aspect of the invention, the controller controls the broadcasting tuner to stop tuning the channel if the software data is absent from the tuned channel.

The foregoing and/or other aspects of the present invention can be achieved by providing a broadcasting receiving apparatus comprising: a broadcasting tuner which receives a broadcasting signal and tunes at least one channel; an external interface which is connected with an external device; an image source selector which selects the external interface as an image source; and a controller which determines whether the tuned channel has software data, and stores the software data in a memory when the tuned channel has the software data, if the external interface is selected.

According to an aspect of the invention, the controller stores information on a data channel having the software data, in the memory.

According to an aspect of the invention, the controller controls the broadcasting tuner to tune the data channel if the external interface is selected.

According to an aspect of the invention, the controller executes the software data stored in the memory.

The foregoing and/or other aspects of the present invention can be achieved by providing a method of controlling a broadcasting receiving apparatus, the method comprising: receiving a non-broadcasting mode selection signal not to process a broadcasting signal; tuning a channel and determining whether the tuned channel comprises the software data; and storing the software data if the software data is included in the tuned channel.

According to an aspect of the invention, the broadcasting receiving apparatus comprises an external interface which is connected with an external device and the non-broadcasting mode selection signal comprises a control signal to select the external interface.

According to an aspect of the invention, the broadcasting receiving apparatus comprises a display part to display a broadcasting signal, and the non-broadcasting mode selection signal comprises a power cut-off signal to cut off power supplied to the display part.

According to an aspect of the invention, the method further comprises storing information on a data channel having the software data, wherein the determining whether the tuned channel has the data comprises tuning the data channel if the non-broadcasting mode selection signal is received again.

According to an aspect of the invention, the method further comprises executing the stored software data.

According to an aspect of the invention, the method further comprises tuning the channel sequentially if the software data is absent from the tuned channel.

According to an aspect of the invention, the method further comprises stopping tuning the channel if the software data is absent from the tuned channel.

The above and/or other aspects of the present invention will become apparent and more readily appreciated from the following description of the exemplary embodiments, taken in conjunction with the accompanying drawings of which:
FIG. 1 is a control block diagram of a broadcasting receiving apparatus according to a first exemplary embodiment of the present invention;
FIG. 2 is a control block diagram of a broadcasting receiving apparatus according to a second exemplary embodiment of the present invention;
FIG. 3 is a control flowchart explaining a control method of a broadcasting receiving apparatus according to the second exemplary embodiment of the present invention;
FIG. 4 is a control flowchart explaining another control method of a broadcasting receiving apparatus according to the second exemplary embodiment of the present invention; and
FIG. 5 is a control flowchart explaining a control method of a broadcasting receiving apparatus according to a third exemplary embodiment of the present invention.

Hereinafter, exemplary embodiments of the present invention will be described with reference to accompanying drawings, wherein like numerals refer to like elements and repetitive descriptions will be avoided as necessary.

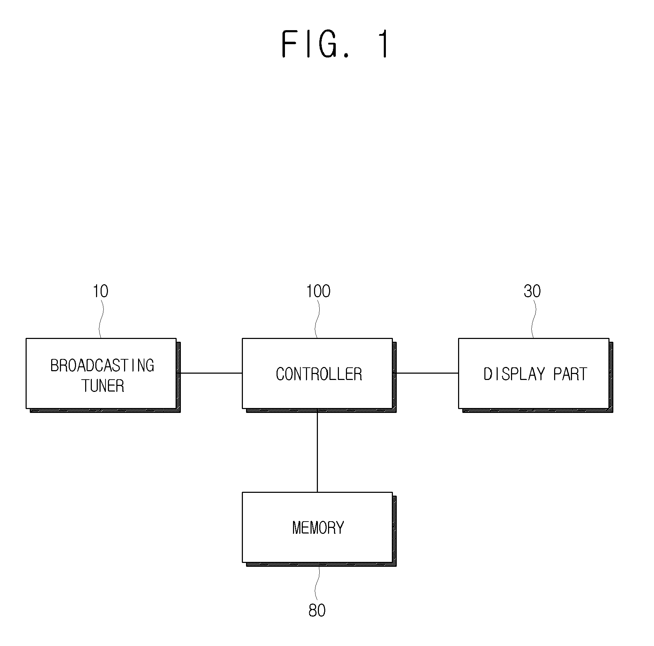

FIG. 1 is a control block diagram of a broadcasting receiving apparatus according to the present invention.

The broadcasting receiving apparatus according to a first exemplary embodiment of the present invention includes a broadcasting tuner 10, a memory 80, a display part 30 and a controller 100 which controls the foregoing elements.

The broadcasting tuner 10 receives a broadcasting signal and tunes a channel according to a control of the controller 100 (to be described later). The broadcasting tuner 10 includes a channel detection module (not shown) and an RF demodulation module (not shown).

The display part 30 includes a display panel (not shown) which displays an image, and a panel driver (not shown) which controls driving of the display panel. The display part 30 according to the first exemplary embodiment of the present invention may include various display modules including a digital light processing (DLP), a liquid crystal display (LCD) and a plasma display panel (PDP).

If a non-broadcasting mode is selected so as not to display a broadcasting signal on the display part 30, the controller 100 controls the broadcasting tuner 10 to tune a channel and determines whether the tuned channel includes software data. If it is determined that the tuned channel includes the software data, the controller 100 controls the memory 80 to store the software data therein. The non-broadcasting mode refers to a mode in which an image signal of the tuned channel is not displayed on the display part 30 even if the broadcasting receiving apparatus receives power to tune a channel of the broadcasting tuner 10. The controller 100 downloads and executes the software data included in the broadcasting signal through the broadcasting tuner 10 while the broadcasting signal is not displayed on the display part 30. The exemplary embodiment of the present invention can be realized by such a function of the controller 100. Other elements can be assembled with each other to realize the present invention in various exemplary embodiments.

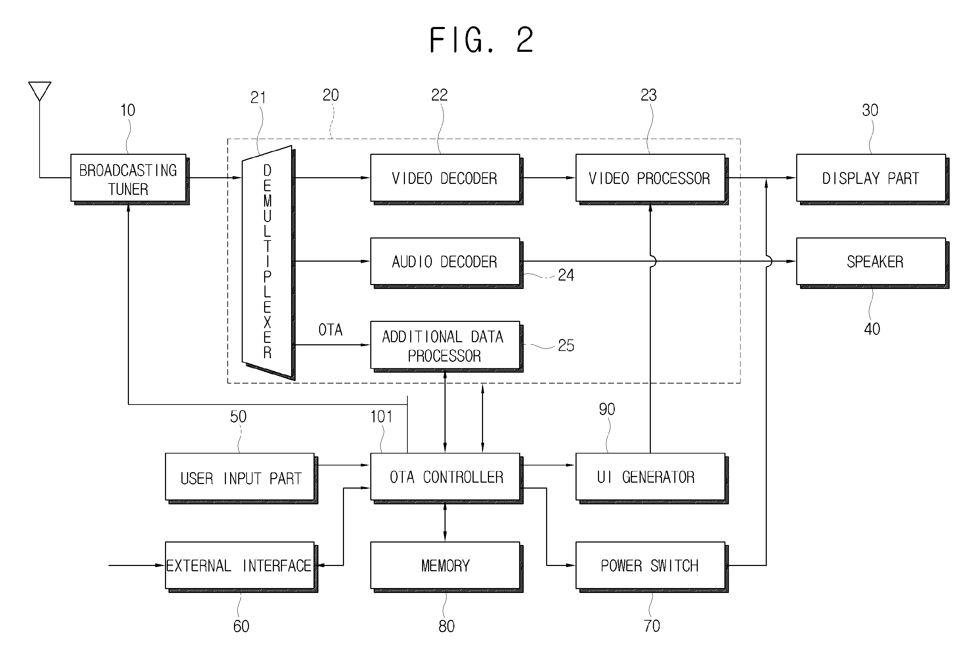

FIG. 2 is a control block diagram of a broadcasting receiving apparatus according to a second exemplary embodiment of the present invention. As shown therein, the broadcasting receiving apparatus includes a broadcasting tuner 10, a broadcasting signal processor 20, a display part 30, a speaker 40, a user input part 50, an external interface 60, a power switch 70, a user interface (UI) generator 90 and an over the air (OTA) controller 101 which controls the foregoing elements. The elements such as the broadcasting tuner 10 and the display part 30 are the same as those in the first exemplary embodiment, and the repetitive description will be avoided here.

A broadcasting signal which is demodulated by the broadcasting tuner 10 is processed by the broadcasting signal processor 20 to be outputted to the display part 30 and the speaker 40. The broadcasting signal processor 20 may include a demultiplexer 21, a video decoder 22, a video processor 23, an audio decoder 24 and an additional data processor 25.

The demultiplexer 21 divides the demodulated broadcasting signal into a video signal, an audio signal and additional data.

The divided video signal, audio signal and additional data are respectively restored by the video decoder 22, the audio decoder 24 and the additional data processor 25. The video decoder 22, the audio decoder 24 and the additional data processor 25 restore the divided video signal, audio signal and additional data with a decoding format corresponding to an encoding format used to transmit the broadcasting signal.

The decoded audio signal is outputted to the speaker 40.

The decoded video signal is converted into a vertical frequency, resolution and picture aspect ratio according to an output standard of the display part 30 by the video processor 23. The video processor 23 may include an image processing module such as a scaler.

The additional data processor 25 processes additional data such as over the air (OTA) data that is included in the channel. The OTA data is software data transmitted together with the image signal. The broadcasting receiving apparatus may receive and execute the software data according to its product specifications. The OTA data includes firmware which is used to drive the broadcasting receiving apparatus. The firmware is executed by the OTA controller 100.

The user input part 50 selects a non-broadcasting mode in which the broadcasting signal is not displayed on the display part 30. The user input part 50 is provided to tune the channel, turn on/off power, select the external interface 60 and input various functions of the broadcasting receiving apparatus. The user input part 50 includes a key, a button or a key signal generator to generate a key signal corresponding to the manipulation of the key or the button. The user input part 50 may include a remote controller, a mouse, a keyboard, a keypad and a touch panel. The user input part 50 may be provided in an external surface of a main body casing of the broadcasting receiving apparatus. The user input part 50 includes a signal receiver which receives a controller signal from a device such as a remote controller. The user input part 50 according to the second exemplary embodiment of the present invention includes an external input mode selection key which is provided to select an additional image source connected with the external interface 60 other than the broadcasting signal, and a power cut-off key which turns on and off power supplied to the display part 30. If a user selects an external input mode, the external interface 60 is connected with an external device and the broadcasting receiving apparatus stops displaying the broadcasting signal regardless of outputting the image signal.

The external interface 60 of the broadcasting receiving apparatus is connected with the external device to display the image signal outputted by the external device on the display part 30. The external interface 60 includes various connectors, e.g., a D-sub connector, an S-video connector and a DVI connector.

The broadcasting receiving apparatus may include an additional image signal processor to process the image signal inputted from the external interface 60. If an analog signal is inputted from the external interface 60, the broadcasting receiving apparatus may include an analog decoder to decode the inputted analog signal. The analog decoder may be provided as a chip other than the broadcasting signal processor 20, or may be embedded in the broadcasting receiving apparatus as a single chip.

The power switch 70 turns on and off power supplied to the display part 30 according to a control of the OTA controller 101. Typically, if it is selected to turn off power by the user input part 50, not all the elements of the broadcasting receiving apparatus stop receiving power unless main power such as AC power is cut off. Even though power supplied to the display part 30 is cut off, minimum power is supplied to the respective elements to control the broadcasting receiving apparatus. If a user selects the power shutdown key, the power switch 70 of the broadcasting receiving apparatus is switched off to cut off power supplied to the display part 30. In a power off mode to cut off power supplied to the display part 30, the display part 30 does not display the broadcasting signal. Meanwhile, the broadcasting signal may be tuned since the broadcasting tuner 10 and the broadcasting signal processor 20 receive power.

A memory 80 includes an electrically erasable and programmable read only memory (EEPROM), and stores OTA data included in a broadcasting signal and a data channel having the OTA data according to a control of the OTA controller 101. In the second exemplary embodiment, a data channel refers to a channel which includes the OTA data among a plurality of channels tuned by the broadcasting tuner 10.

If a power off mode is selected, the user interface (UI) generator 90 generates a user interface to store the OTA data, and displays the UI on the display part 30. The UI generator 90 generates a menu window to select whether to tune a channel. A user may select whether to tune the channel through the menu window and the user input part 50, and may store the OTA data included in the tuned channel if the channel is tuned.

In another exemplary embodiment of the present invention, it may be set to automatically tune a channel if a power off mode is selected. That is, the channel is tuned and OTA data is stored according to an algorithm set as a default, even if a user does not select to tune the channel through a menu window.

The OTA controller 101 controls such as to download the OTA data among the received broadcasting signals. The OTA controller 101 stores a corresponding algorithm code to control reception and storage of the OTA data, and may be realized by a micro controller unit (MCU) to execute the stored algorithm code. If the non-broadcasting mode is selected not to display the broadcasting signal on the display part 30, the OTA controller 101 controls the broadcasting tuner 10 to tune the channel and determines whether the tuned channel includes the OTA data. If it is determined that the tuned channel includes the OTA data, the OTA controller 101 stores the OTA data in the memory 80. As described above, the non-broadcasting mode, according to the exemplary embodiment of the present invention, includes the external input mode to select the external interface 60 and the power off mode to cut off power supplied to the display part 30.

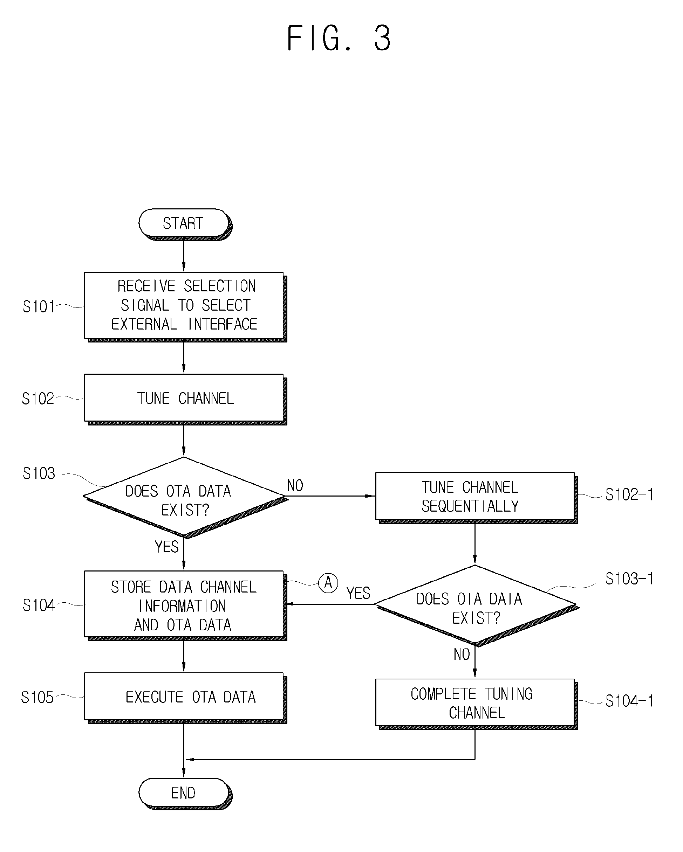

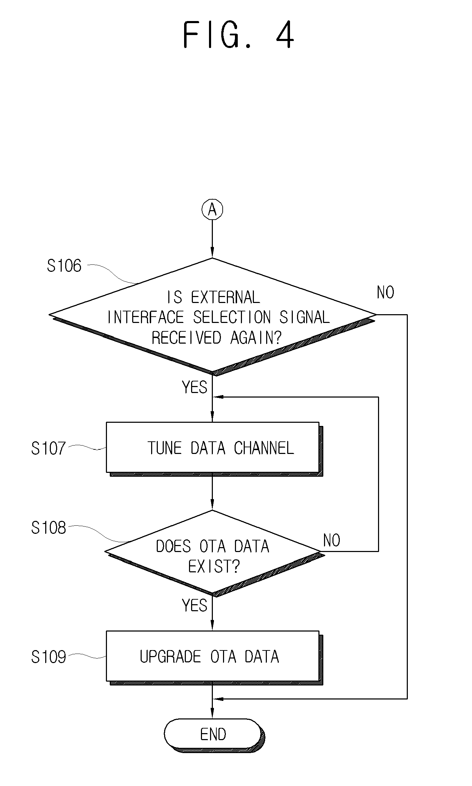

FIG. 3 is a control flowchart explaining a control method of the broadcasting receiving apparatus according to the second exemplary embodiment of the present invention. FIG. 4 is a control flowchart explaining another control method of the broadcasting receiving apparatus according to the second exemplary embodiment of the present invention. The non-broadcasting mode according to the second exemplary embodiment includes the external input mode. The control method of the broadcasting receiving apparatus according to the second exemplary embodiment will be described with reference to FIGs. 2 and 3.

As shown in FIG. 2, if a selection signal is received to select the external interface 60 (S101), the OTA controller 101 controls the broadcasting tuner 10 to tune the channel (S102). If the external interface 60 is selected as the image source, the broadcasting signal is not displayed on the display part 30 regardless of whether the external interface 60 is connected with the external device.

The OTA controller 101 determines whether the tuned channel includes the OTA data (S103).

If it is determined that the tuned channel includes the OTA data, the OTA controller 101 stores the OTA data and information on the data channel having the OTA data in the memory 80 (S104). That is, the OTA controller 101 downloads the OTA data through the broadcasting tuner 10, which does not need to receive the broadcasting signal if the display part 30 does not display the broadcasting signal. Since, generally, the stored OTA data includes a firmware used to drive the broadcasting receiving apparatus, the OTA controller 101 executes the upgraded firmware (S105).

If it is determined that the tuned channel does not include the OTA data, the OTA controller 101 tunes next channels sequentially (S102-1), and determines whether the next channels include the OTA data (S103-2).

If the tuned next channels include the OTA data, the OTA controller 101 stores the data channel information and the OTA data (S104). If it is determined that the tuned channels do not include the OTA data, the OTA controller 101 controls the broadcasting tuner 10 to stop tuning the channels and ends the storage process of the OTA data (S104-1).

If the selection signal is received again to select the external interface 60 (S106), the OTA controller 101 tunes the data channel stored in the memory 80 (S107).

Typically, the OTA data is received through a specific channel. The OTA data can be included in the channel which had the OTA data first. Thus, the OTA controller 101 tunes the data channel alone by using the data channel information stored in the memory 80 and determines whether the OTA data exists if the external interface 60 is selected again (S108).

If the OTA data exists in the tuned channel, the OTA controller 101 stores the OTA data in the memory 80 to upgrade the OTA data and executes the upgraded OTA data (S109).

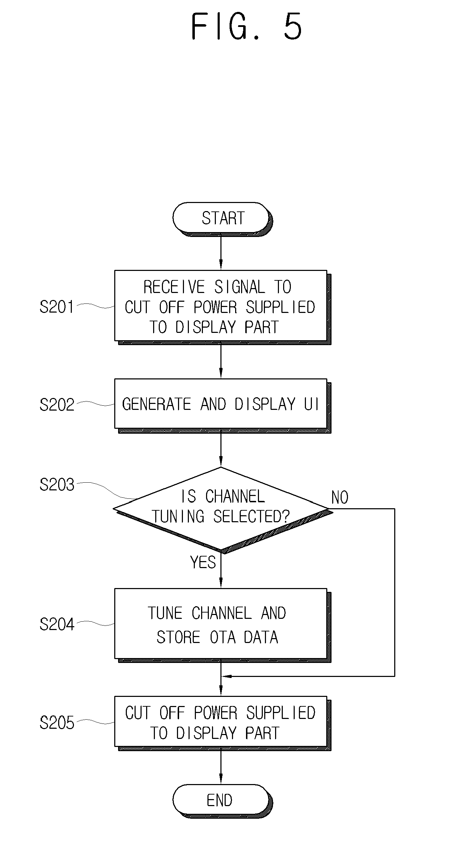

FIG. 5 is a control flowchart explaining a control method of a broadcasting receiving apparatus according to a third exemplary embodiment of the present invention. A non-broadcasting mode according to the third exemplary embodiment includes a power-off mode in which power is not supplied to a display part 30.

If a power cut-off signal is received to cut off power supplied to the display part 30 (S201), an OTA controller 101 controls a UI generator 90 to generate a UI such as a menu window to select a channel to be tuned, and displays the UI on the display part 30 (S202).

If a user selects to tune the channel (S203), the OTA controller 101 tunes the channel as the first exemplary embodiment and determines whether the tuned channel includes the OTA data. If it is determined that the tuned channel includes the OTA data, the OTA controller 101 stores the OTA data in a memory 80 (S204). The operation of storing a data channel having the OTA data and the operation of tuning the data channel alone when the power cut-off signal is received again, may apply to the control method according to the third exemplary embodiment of the present invention.

The OTA controller 101 cuts off power supplied to the display part 30 (S205).
The operation (S204) of storing the OTA data and the operation (S205) of cutting off power may be performed at the same time. The operation (S205) of cutting off power may be performed prior to the operation of S204.

The operation of generating the UI included in the control method according to the third exemplary embodiment may be included in the first exemplary embodiment. If the non-broadcasting mode is selected, it may be set to automatically tune the channel without generating the UI.

The broadcasting receiving apparatus according to the foregoing exemplary embodiments may include a TV or a monitor which has a display part 30. In another exemplary embodiment, a broadcasting receiving apparatus may include a set-top box which has a broadcasting tuner 10 to tune a broadcasting signal and an external interface 60, instead of the display part 30. If the broadcasting receiving apparatus includes the set-top box, it may receive the OTA data and upgrade existing data if the external input mode is selected or a user inputs a tuning control signal to store the OTA data.

As described above, the broadcasting receiving apparatus according to the present invention may download OTA data while the broadcasting signal is not displayed and the broadcasting tuner 10 does not tune the broadcasting signal. Thus, the broadcasting receiving apparatus does not require an additional broadcasting tuner to receive the OTA data. In addition, the broadcasting receiving apparatus according to the present invention may not tune an undesirable channel to receive OTA data.

As described above, the exemplary embodiments of the present invention provide a broadcasting receiving apparatus which efficiently receives OTA data, and a control method thereof.

Although a few exemplary embodiments of the present invention have been shown and described, it will be appreciated by those skilled in the art that changes may be made in these exemplary embodiments without departing from the scope of the invention as defined in the appended claims.

## Claims

1. A broadcast receiving apparatus, comprising:
a broadcast tuner for receiving a broadcast signal and tuning to at least one channel; and
a controller for controlling the broadcast tuner;
wherein, in the event that a non-broadcast mode is selected in which the broadcast signal is not to be displayed, the controller is configured to control the broadcast tuner to tune to a channel and to determine whether the tuned channel includes software related data, and to store such software related data in a memory.

2. Apparatus according to claim 1, further comprising an external interface for connection to an external device, wherein
the non-broadcast mode comprises an external input mode in which the external interface is selected as an image source.

3. Apparatus according to claim 1 or 2, further comprising a power switch to turn on and off power supplied to a display part, wherein
the non-broadcast mode comprises a power-off mode in which power supplied to the display part is cut off.

4. Apparatus according to any one of claims 1 to 3, wherein the controller stores information on a data channel that includes the software related data in the memory.

5. Apparatus according to claim 4, further comprising user input means for selecting the non-broadcast mode, wherein
the controller is arranged to control the broadcast tuner to tune to the data channel if the non-broadcast mode is selected.

6. Apparatus according to any one of the preceding claims, wherein the controller is arranged to execute the software related data stored in the memory.

7. Apparatus according to any one of the preceding claims, wherein the software related data comprises firmware.

8. Apparatus according to any one of the preceding claims, wherein the controller is arranged to control the broadcast tuner to tune channels sequentially if the software related data is absent from the tuned channel.

9. Apparatus according to claim 8, wherein the controller is arranged to control the broadcast tuner to stop tuning to a channel if the software related data is absent from the channel being tuned to.

10. A method of controlling a broadcast receiving apparatus, the method comprising:
receiving a non-broadcast mode selection signal indicating that a broadcast signal is not to be processed;
tuning to a channel;
determining whether the tuned channel includes software related data; and
storing the software related data if the tuned channel includes the software related data.

11. A method according to claim 10, wherein the broadcast receiving apparatus comprises an external interface connectable to an external device and the non-broadcasting mode selection signal comprises a control signal to select the external interface.

12. A method according to claim 10 or 11, wherein the broadcast receiving apparatus comprises a display part to display a broadcast signal thereon, and the non-broadcast mode selection signal comprises a power cut-off signal to cut off power supplied to the display part.

13. A method according to claim 10, 11 or 12, further comprising storing information on a data channel that includes the software related data, wherein the step of determining whether the tuned channel includes the software related data comprises tuning to the data channel when the non-broadcast mode selection signal is received again.

14. A method according to any one of claims 10 to 13, further comprising executing the stored software related data.

15. A method according to any one of claims 10 to 14, further comprising tuning to channels sequentially if the software related data is absent from the tuned channel.

16. A method according to claim 15, further comprising stopping tuning to a channel if the software related data is absent from the channel being tuned to.
